(19) Europäisches Patentamt
European Patent Office
Office européen des brevets

(11) Publication number: 0 126 616
A2

# (12) EUROPEAN PATENT APPLICATION

(21) Application number: **84303288.9**

(22) Date of filing: **15.05.84**

(51) Int. Cl.[3]: **C 08 G 59/42**, C 08 G 59/50, C 08 L 63/10

(30) Priority: **16.05.83 US 495032**

(43) Date of publication of application: **28.11.84 Bulletin 84/48**

(84) Designated Contracting States: **BE CH DE FR GB IT LI NL SE**

(71) Applicant: **E.I. DU PONT DE NEMOURS AND COMPANY, 1007 Market Street, Wilmington Delaware 19898 (US)**

(72) Inventor: **Tuminello, William Howard, 712 Fawn Road, Newark Delaware 19711 (US)**

(74) Representative: **Jones, Alan John et al, CARPMAELS & RANSFORD 43 Bloomsbury Square, London, WC1A 2RA (GB)**

(54) **Compatible mixtures of elastomer in diglycidyl ether of bisphenol A.**

(57) Epoxy resins of glycidyl ether of bisphenol A and anhydride curing agents are rendered more flexible, tough and heat resistant by mixing ethylene/methylacrylate/ethyl hydrogen maleate type copolymers in the ether prior to polymerization.

EP 0 126 616 A2

## TITLE

# COMPATIBLE MIXTURES OF ELASTOMER IN DIGLYCIDYL ETHER OF BISPHENOL A

## BACKGROUND

This invention relates to a compatible mixture of a particular class of elastomers in diglycidyl ether of bisphenol A. This mixture is useful in forming anhydride cured epoxy resins having increased toughness, better heat resistant properties and higher modulus, thus producing resins useful as adhesives that are less brittle. This invention also relates to a process of preparing toughened epoxy resins.

It is known in the art to add elastomers to epoxy resins to increase the toughness of the resin. See for example Hammer U.S. Patent 4,157,428 especially Example 21, and Clarke U.S. Patent 3,509,230. It has now been discovered that a particular class of elastomers may be added to epoxy resins that are to be anhydride cured, and that the cured product has better heat deflection properties, increased toughness and higher modulus. It has been further discovered that when two different elastomers (at least one from the particular class) are used in combination in the epoxy resin the properties are enhanced to an unexpected degree.

## SUMMARY OF THE INVENTION

The process of the present invention comprises curing in the presence of an amine catalyst, a mixture of an anhydride, and a solution of the diglycidyl ether of bisphenol A containing at least one polymer having a melt index of 1 to 4000 g/10 minutes and the formula E/X/Y. (Polymers of this type are described in Green U.S. Patent

338

3,904,588, and Hoh U.S. Patent 4,275,181.) The solution may contain more than one polymer of the aforesaid formula, and/or it may also contain a different polymer, i.e. carboxyl terminated butadiene-acrylonitrile copolymer. The polymer having the formula E/X/Y is usually present in the solution in the amount of 1 to 20% by weight of the solution. The anhydride is usually present in the mixture in the amount sufficient to supply about .6 to .95 anhydride groups for each epoxy group on the ether.

In the formula, E represents polymerized ethylene units, X represents polymerized alkylacrylate units or alkylmethacrylate units where the alkyl group has 1 to 8 carbon atoms, or alkyl vinyl ethers units where the alkyl group has 1 to 4 carbon atoms, or vinyl ester units of $C_1$ to $C_{18}$ alkanoic acids, or acrylonitrile units, or methacrylonitrile units, or polymerized glycidyl methacrylate units, and Y represents polymerized unsaturated mono- or dicarboxylic acid units of 3-20 carbon atoms or esters of said acids, or polymerized $SO_2$ units or polymerized CO units. The polymer contains between 20 and 60% by weight ethylene units, between 30 and 70% by weight X units, and between 0.5 and 20% (a complemental amount) of polymerized Y units.

The preferred polymer has Y units of ethyl hydrogen maleate. In the preferred mixture the anhydride is hexahydrophthalic anhydride.

The composition (compatible mixture) of the present invention is that employed by the process above described.

## DETAILED DESCRIPTION

Diglycidyl ether of bisphenol A has the formula:

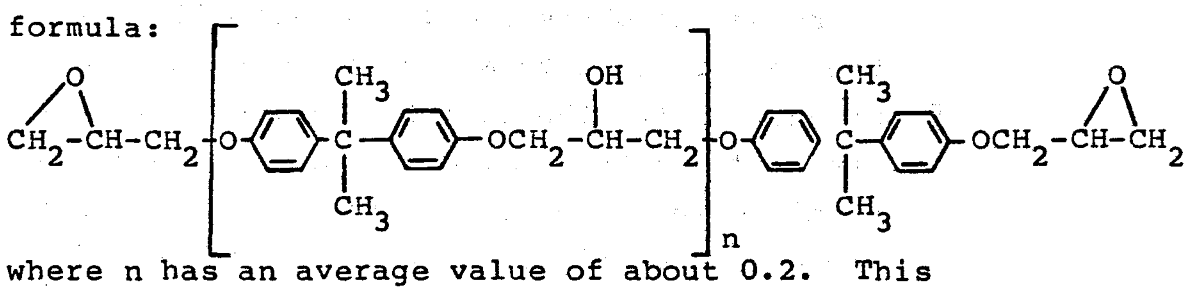

where n has an average value of about 0.2. This compound may be cured to a solid resin by the action of various chemical compounds, for example, amines, acids, Lewis acids and anhydrides. This invention is primarily concerned with improving the properties of resins made by the curing of this compound with anhydrides. Suitable anhydrides include hexahydrophthalic anhydride, maleic anhydride, and phthalic anhydride. The reaction is accelerated by the addition of catalysts. Suitable catalysts include metal catalysts such as chromium acetoacetonate, amine catalysts such as 2,4,6-tris(dimethylaminomethyl)phenol and dimethyl benzyl amine, and amine-boron trifluoride catalysts such as monoethyl amine: $BF_3$. The amount of anhydride employed and the amount of catalyst employed to obtain satisfactory cured products from the diglycidyl ether of bisphenol A have been empirically determined prior to this invention: a ratio of about .85 anhydride groups to 1 epoxy group is about optimum, but a range of about .6 to about .95 is operable. The amount of amine catalyst employed is usually in the range of about .2 to .8 parts by weight per 100 parts by weight of the mixture.

The present invention is based on the discovery that by mixing at least one polymer having the formula E/X/Y in the diglycidyl ether of

bisphenol A, and then curing the resin with an anhydride in the usual way that a product of increased toughness, and heat stability is obtained. Even better results are obtained when more than one polymer having the formula E/X/Y is dissolved in the ether of bisphenol A, and good results are also obtained when one polymer having the formula E/X/Y and a second polymer of carboxy terminated acrylonitrile/butadiene copolymer are both dissolved in the same solution of ether of bisphenol A.

If more than one polymer having the formula E/X/Y is employed, it is preferred that the polymers differ in the amount of Y units present. The Y units seem to have a great deal to do with the solubility of the polymer in the ether of bisphenol A, and as the reaction of the anhydride and the ether proceeds, polymers with larger amounts of Y units tend to form very small rubber particles in the matrix, and the polymer containing fewer Y units tends to form larger rubber particles in the matrix. (The size of these particles can be determined by optical microscopy and small angle X-ray scattering techniques). It appears that the most desirable properties are obtained when there is a mixture of small (about 0.1 to 0.01 μm range) and large (about 1 μm) rubber particles in the matrix.

Likewise it has been determined that mixtures of polymers having the formula E/X/Y and carboxylated acrylonitrile/butadiene when dissolved in the ether of bisphenol A, yield cured products with physical properties that are superior to the results obtained when either polymer is used alone. The carboxylated acrylonitrile/butadiene polymers useful herein contain about 10 to 26% by weight acrylonitrile, and are end capped with carboxyl

groups to the extent that there are about 1.5 to 1.9 carboxyl groups per molecule. Such polymers have a Brookfield viscosity at 27°C of about 120,000 to 180,000 mPa•S. Such polymers are sold commercially by Goodrich as Hycar® rubbers.

The ratio of polymers having the formula E/X/Y to carboxylated acrylonitrile/butadiene polymer may vary from about .5 to 1 to 1.5 to 1. It is convenient to add the polymers on an equal weight basis. Mixtures of E/X/Y polymers in which the Y component is present in differing amounts can also be used in about the same ratios as that set forth above.

Compatible mixtures of the polymer or polymers in the glycidyl ether of bisphenol A may be obtained merely by adding the polymer to the ether, but it is faster to dissolve the polymers in a less viscous solvent such as acetone, and then add that solution to the ether, followed by mixing and evaporation of the less viscous solvent.

The term "compatible mixtures" includes solutions, where the polymer is totally dissolved in the bisphenol A, as well as partial solutions, where only a portion of the polymer is dissolved in the bisphenol A.

In the Examples which follow, all parts and percentages are by weight unless otherwise specified.

<u>Examples 1-8</u>

Diglycidyl ether of bisphenol A with an epoxy equivalent weight of about 182-192 and viscosity at 25°C of 12,000 to 16,000 cps was mixed at 150°C, 10 mm Hg with the copolymers shown in Table 1 below. The mixture was cooled to 90°C and hexahydrophthalic anhydride was added as liquid. The mixture was degassed at 90°C, 10mm Hg. Dimethylbenzylamine was added as a catalyst and the

mixture was poured immediately in molds made from aluminum plates separated by 3.25mm spacers and held together with "C" clamps. The molds were preheated at 150°C prior to filling. Filled molds were placed in a 79°C oven, 1 hr. and at 150°C, 2 hrs. to form cured slabs 175mm x 150mm x 3.0mm. Properties for slabs made from copolymers with different reactive termonomers, ethylene levels and melt flows are listed in Table 1. Substantially improved impact strength with slightly decreased modulus was observed in most cases.

TABLE I

HEXAHYDROPHTHALIC ANHYDRIDE CURES: EFFECT OF MODIFIER COMPOSITION

| Example | Control | 1 | 2 | 3 | 4 | 5 | 6 | 7 | 8 | MI* |
|---|---|---|---|---|---|---|---|---|---|---|
| Diglycidyl ether of bisphenol A | 100 | 100 | 100 | 100 | 100 | 100 | 100 | 100 | 100 | |
| Hexahydrophthalic anhydride | 80 | 80 | 30 | 80 | 80 | 80 | 80 | 80 | 80 | |
| Dimethylbenzylamine | 0.4 | 0.4 | 0.4 | 0.4 | 0.4 | 0.4 | 0.4 | 0.4 | 0.4 | |
| E*** (41)** MA**** (55) ethyl hydrogen maleate (4) | | 11 | | | | | | | | 8.7 |
| E*** (38) MA**** (59) glycidylmethacrylate (3.5) | | | 11 | | | | | | | 10.8 |
| E*** (50) MA**** (43) $SO_2$ (7) | | | | 11 | | | | | | 19.0 |
| E*** (45) MA**** (52) glycidylmethacrylate (3) | | | | | 11 | | | | | 12.1 |
| E*** (42) MA**** (55) ethyl hydrogen maleate (3) | | | | | | 11 | | | | 20.0 |
| E*** (41) MA**** (55) ethyl hydrogen maleate (4) | | | | | | | 11 | | | 11.2 |
| E*** (38) MA**** (58) ethyl hydrogen maleate (4) | | | | | | | | 11 | | 16.2 |
| E*** (35) MA**** (55) CO (10) | | | | | | | | | 11 | 2.4 |
| Flex Modulus (MPa) | 2940 | 2710 | 2630 | 2520 | 2620 | 2580 | 2340 | 2820 | 2650 | |
| .95 confidence limit | 20 | 40 | 30 | 30 | 10 | 20 | 30 | 30 | 60 | |
| Izod Impact Str. (J/m) | 17 | 27 | 37 | 30 | 18 | 32 | 19 | 26 | 30 | |
| .95 confidence limit | 3 | 3 | 8 | 6 | 4 | 3 | 2 | 3 | 2 | |

* M.I. means melt index
** the number ( ) is the % by weight of that polymerized monomer unit in the copolymer
*** Ethylene
**** Methylacrylate

Example 9

A 1 to 1 mixture of the copolymer of Example 6 and a copolymer of ethylene (40) methylacrylate (50) and ethyl hydrogen maleate (10) melt index, 9.5, four parts by weight total, was dissolved in acetone and added to 100 parts by weight of the diglycidyl ether of bisphenol A of the type described in Examples 1-8 and 80 parts by weight hexahydrophthalic anhydride. The acetone was distilled off and 0.4 parts by weight dimethylbenzylamine was added. The composition was then polymerized in the manner described in Examples 1-8. The properties of the product are tabulated below and compared to a similar product in which no copolymer was added.

TABLE II

| Example | Control | 9 |
|---|---|---|
| Tensile Modulus (MPa) | 3000 | 3090 |
| .95 confidence limit | 90 | 100 |
| Tensile Strength (MPa) | 49 | 55 |
| .95 confidence limit | 24 | 11 |
| Elongation at Break (%) | 1.9 | 2.1 |
| .95 confidence limit | 1.2 | 0.6 |
| Work to Break (J) | 1.2 | 1.3 |
| .95 confidence limit | 1.4 | 0.6 |
| Heat Deflection Temp. (°C) | 117 | 103 |
| Notched Izod Impact Strength (J/M) | 20 | 26 |
| .95 confidence limit | 2 | 10 |

Example 10

Diglycidyl ether of bisphenol A was mixed with a one to one mixture of a copolymer of ethylene (41) methylacrylate (55) and ethyl hydrogen maleate (4) and a carboxy terminated butadiene/acrylonitrile copolymer containing 18% by weight acrylonitrile, 1.8 carboxyl groups per molecule, and a Brookfield viscosity at 27°C of 150,000 mPa·S.

The proportion of the ether, the anhydride, and the catalyst were the same as in the previous examples. The product was cured for 2 hours at 100°C plus 2 hours at 150°C. The results at 5 percent by weight copolymer/carboxy terminated butadiene/acrylonitrile copolymer, and 10% and 12% compared favorably to the results obtained when a 1:1 blend of ethylene (41), methylacrylate (55), ethyl hydrogen maleate (4) and ethylene (40), methylacrylate (50) ethyl hydrogen maleate (10) was employed in the same 5%, 10% and 12% proportions.

## CLAIMS

1. A compatible mixture comprising (a) at least one polymer selected from the class consisting of polymers having the formula E/X/Y where E represents polymerized ethylene units, X represents polymerized alkylacrylate units or alkylmethacrylate units where the alkyl group has 1 to 8 carbon atoms, or polymerized alkyl vinyl ether units where the alkyl group has 1 to 4 carbon atoms, or polymerized vinyl ester units of $C_1$ to $C_{18}$ alkanoic acids, or polymerized acrylonitrile units or polymerized methacrylonitrile units or polymerized glycidyl methacrylate units, and Y represents polymerized unsaturated mono- or dicarboxylic acid units of 3 to 20 carbon atoms or esters of such acids, or polymerized $SO_2$ units and polymerized CO units, said polymer containing between 20 and 60% by weight polymerized ethylene units, 30 and 70% by weight polymerized units represented by X, and 0.5 and 20% by weight of polymerized units represented by Y, said polymer having a melt index of 1.0 to 4000 g/10 min., and (b) diglycidyl ether of bisphenol A.

2. The compatible mixture of Claim 1 in which the polymer having the formula E/X/Y is present in the amount of about 1 to 20% by weight of the mixture.

3. The compatible mixture of Claim 1 or Claim 2 containing two polymers having the formula E/X/Y.

4. The compatible mixture of any one of Claims 1 to 3 which also contains carboxyl terminated butadiene-acrylonitrile copolymer.

5. The compatible mixture of Claim 4 in which the polymer having the formula E/X/Y and the carboxyl terminated butadiene-acrylonitrile copolymer are present in approximately equal amounts by weight.

D-5338

6. The compatible mixture of Claim 4 or Claim 5 in which the butadiene-acrylonitrile polymer contains about 10 to 26 percent by weight acrylonitrile.

7. The compatible mixture of any one of Claims 1 to 6 in which Y is polymerized ethyl hydrogen maleate units.

8. The compatible mixture of any one of Claims 1 to 7 also containing an anhydride.

9. The compatible mixture of Claim 8 in which the anhydride is present in an amount sufficient to supply about .6 to .95 anhydride groups per epoxy on the diglycidyl ether.

10. The compatible mixture of Claim 8 or Claim 9 in which the anhydride is hexahydrophthalic anhydride.

11. The compatible mixture of any one of Claims 1 to 10 also containing a polymerization catalyst.

12. A method of forming a toughened epoxy resin, which comprises adding a polymerization catalyst to the compatible mixture of any one of Claims 8 to 10.

13. A method according to Claim 12 wherein said polymerization catalyst is an amine catalyst.